# EUROPÄISCHE PATENTSCHRIFT

(11) **EP 1 467 886 B1**
(45) Veröffentlichungstag und Bekanntmachung des Hinweises auf die Patenterteilung: **03.05.2006**
(21) Anmeldenummer: 02776660.9
(22) Anmeldetag: 07.09.2002
(51) Int. Cl.: B60K 6/04

(54) **VERFAHREN ZUR STEUERUNG EINES HYBRIDANTRIEBES EINES FAHRZEUGES**
METHOD FOR CONTROLLING THE HYBRID DRIVE OF A VEHICLE
PROCEDE POUR LA COMMANDE D'UN GROUPE MOTEUR HYBRIDE D'UN VEHICULE

(30) Priorität: 15.01.2002 DE 10201264
(43) Veröffentlichungstag der Anmeldung: 20.10.2004
(73) Patentinhaber: ROBERT BOSCH GMBH, 70442 Stuttgart (DE)
(72) Erfinder: LOEFFLER, Juergen, 71638 Ludwigsburg (DE); HOETZER, Dieter, 71701 Schwieberdingen (DE)
(86) Internationale Anmeldenummer: PCT/DE2002/003341
(87) Internationale Veröffentlichungsnummer: WO 2003/059674

(56) Entgegenhaltungen:
- EP-A- 1 160 119
- WO-A-99/46139

## Beschreibung

Die Erfindung betrifft ein Verfahren zur Steuerung eines Hybridantriebes eines Fahrzeuges gemäß dem Oberbegriff des Anspruchs 1.

### Stand der Technik

Hybridantriebe für Fahrzeuge sind bekannt. Bei den hier angesprochenen Hybridantrieben wird eine Verbrennungskraftmaschine mit wenigstens einer elektrischen Maschine kombiniert, so dass mehrere Antriebsquellen für das Fahrzeug zur Verfügung stehen. Entsprechend vorgegebener Anforderungen durch einen Fahrzeugführer können hierbei die Antriebsquellen wahlweise ihre Antriebsmomente in einen Antriebsstrang des Fahrzeuges einspeisen. Hierdurch ergeben sich in an sich bekannter Weise in Abhängigkeit konkreter Fahrsituationen unterschiedliche Antriebsgestaltungsmöglichkeiten, die insbesondere der Verbesserung eines Fahrkomforts und der Reduzierung eines Energieeinsatzes sowie der Reduzierung einer Schadstoffemission dienen.

Bei Hybridantrieben für Fahrzeuge sind serielle Anordnungen, parallele Anordnungen und gemischte Anordnungen von Verbrennungskraftmaschine und elektrischen Maschinen bekannt. Je nach Anordnung sind die elektrischen Maschinen direkt oder indirekt in den Antriebsstrang der Verbrennungskraftmaschine schaltbar. Zur Wirkverbindung der Verbrennungskraftmaschine und/oder der elektrischen Maschinen ist es bekannt, diese über Getriebe, beispielsweise Planetengetriebe oder dergleichen, und Kupplungen miteinander wirkverbindbar anzuordnen.

Um einen Fahrerwunsch nach einer Antriebsleistung des Hybridantriebes optimal umsetzen zu können, ist eine koordinierte Ansteuerung der Antriebsmaschinen des Hybridantriebes erforderlich, die bekanntermaßen durch ein sogenanntes Steuergerät erfolgt. Die Ansteuerung der Antriebsmaschinen kann hierbei basierend auf einem durch das Steuergerät zu bestimmenden Soll-Betriebszustand des Hybridantriebes erfolgen. Ziel bei der Bestimmung dieses Soll-Betriebszustandes ist insbesondere ein geringer Kraftstoffverbrauch, ein dynamisches Fahrverhalten des Fahrzeuges und eine geringe Schadstoffemission. Ferner ist allgemein bekannt, Fahrzeuge mit einem elektronisch ansteuerbaren Bremssystem, beispielsweise einer elektrohydraulischen Bremse oder einer elektromechanischen Bremse, auszustatten.

Aus der EP-A-1 160 119 ist ein Verfahren der eingangs genanten Art bekannt, bei dem die negative Momentanforderung an das Fahrzeug durch eine Radbremsung ansprechend auf eine Betätigung des Bremspedals, sowie durch eine Motorbremsung ansprechend auf eine Entlastung des Gaspedals erfolgen kann. Bei einem der beschriebenen Ausführungsbeispiele wird bei der Steuerung der Motorbremsung eine eventuelle gleichzeitige Radbremsung berücksichtigt, indem im Falle einer solchen Bremsung über die Festlegung eines Bremskorrekturkoeffizienten und die Einstellung einer Soll-Verzögerung ein Motordrehmoment, ein Getriebe-übersetzungsverhältnis und eine Sperrkupplung reguliert wird. Umgekehrt werden jedoch bei der Radbremsung, d.h. bei der Ansteuerung des Radbremssystems des Fahrzeugs, außer dem Maß des Niedertretens des Bremspedals keine anderen Parameter berücksichtigt, so dass die vom Radbremssystem auf die Räder bzw. einen Abtriebsstrang des Hybridantriebes ausgeübten Ist-Bremsmomente allein durch das Maß des Niedertretens des Bremspedals bestimmt werden.

Weiter ist es aus der WO 99/46139 bei einem Verfahren und einer Vorrichtung zum Ermitteln von Sollwerten für Bremsmomente eines elektrischen Radbremssystems eines Fahrzeug bereits bekannt, bei der Vorgabe der Soll-Radbremsmomente neben einer negativen Momentanforderung durch ein Bremspedal auch andere Parameter zu berücksichtigen, zum Beispiel die Dynamik des Verzögerungswunschs, bzw. die Bremsmomente nach Maßgabe elektrischer Signale aus einer Steuerung bzw. Regelung aufzubauen, beispielsweise aus Sensoren, die der Steuerung Betriebszustände einer Batterie, eines Motors oder eines gegebenenfalls vorhandenen Getriebes mitteilen.

### Vorteile der Erfindung

Das erfindungsgemäße Verfahren mit den in Anspruch 1 genannten Merkmalen bietet den Vorteil, dass eine optimale Nutzung der verfügbaren Energie des Fahrzeuges möglich ist und insbesondere ein größerer Teil der Bremsenergie unter Berücksichtigung von energieoptimalen, komfortoptimalen und sicherheitsoptimalen Randbedingungen zurückgewonnen werden kann. Durch Rückspeisung der zurückgewonnenen Bremsenergie in das elektrische Bordnetz kann ein Kraftstoffverbrauch der Verbrennungskraftmaschine gesenkt werden. Die rückgespeiste Energie kann insbesondere in einer Hochleistungsbatterie gespeichert werden, die der Energieversorgung der wenigstens einen elektrischen Maschine dient, und steht im Bedarfsfalle zur Einspeisung in das elektrische Bordnetz zur Verfügung.

Bevorzugte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: ein Blockschaltbild des erfindungsgemäßen Verfahrens;
- Figur 2: schematisch das Antriebs- und Bremssystem eines Fahrzeuges und
- Figur 3: Momentkennlinien eines Hybridantriebes..

### Beschreibung des Ausführungsbeispiels

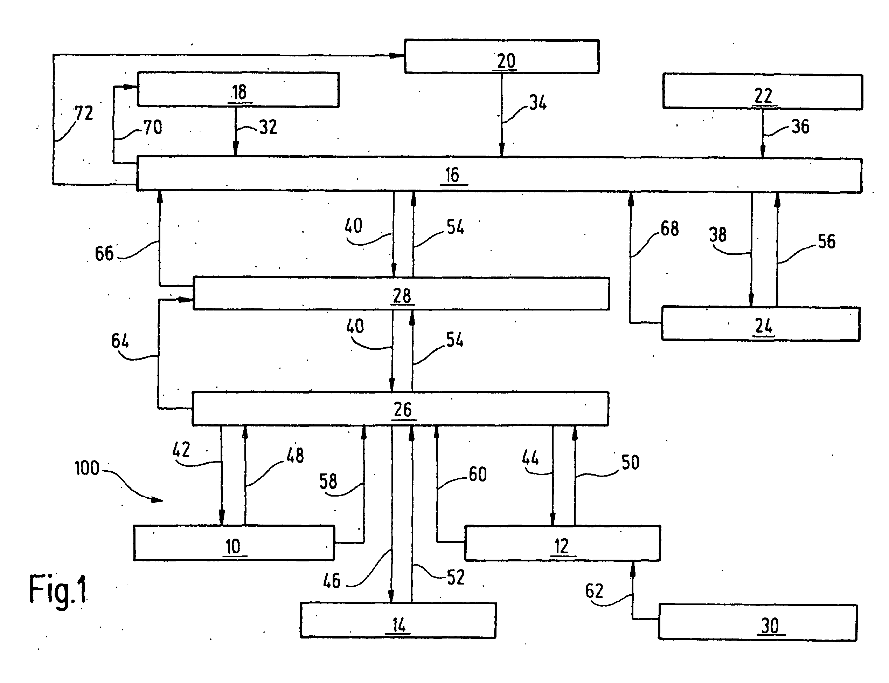

Figur 1 zeigt in einem Blockschaltbild einen Ausschnitt aus einem Steuergerät zur Ansteuerung eines Hybridantriebes eines Fahrzeuges. Der Hybridantrieb 100 umfasst eine Verbrennungskraftmaschine 10 sowie wenigstens eine elektrische Maschine 12. Diese wirken über ein Getriebe 14 auf einen Antriebsstrang des Fahrzeuges.

Das Motorsteuergerät umfasst einen so genannten Koordinator 16 von Längsbewegungen, also in beziehungsweise entgegen einer gedachten Fahrtrichtung des Fahrzeuges. Diese Längsbewegungen des Fahrzeuges werden durch eine Anforderung eines Fahrzeugführers, beispielsweise durch ein Fahrpedal 18 und ein Bremspedal 20, ausgelöst. Ferner kann eine Anforderung an die Längsbewegung des Fahrzeuges durch einen Fahrautomat 22 erfolgen. Durch Fahrpedal 18 und/oder Bremspedal 20 und/oder Fahrautomat 22 ist eine Beschleunigung beziehungsweise Verzögerung des Fahrzeuges in Längsrichtung anforderbar, die durch den Hybridantrieb 100 beziehungsweise eine Bremseinrichtung 24 des Fahrzeuges umgesetzt werden. Zur koordinierten Ansteuerung des Hybridantriebes 100, das heißt der einzelnen Komponenten des Hybridantriebes 100, ist ein so genannter Koordinator 26 vorgesehen. Der Antriebskoordinator 26 kommuniziert mit dem Längsbewegungsköordinator 16 über einen Fahrzeugkoordinator 28. Das Fahrzeug umfasst ferner ein elektrisches Bordnetz 30 zur Versorgung der elektrischen Maschine 12 und weiterer elektrischer Aggregate des Fahrzeuges.

Vom Fahrpedal 18 erhält der Koordinator 16 ein Signal 32, das eine Soll-Leistung am Ausgang des Getriebes 14 anfordert. Vom Bremspedal 20 erhält der Koordinator 16 ein Signal 34, das ein Soll-Moment an den Rädern des Fahrzeuges anfordert. Die Größe des Signals 34 bezieht sich auf die Summe der Bremsmomente an den vier Rädern des Fahrzeuges und ist somit proportional zu einer gewünschten Bremskraft, die auf das Fahrzeug in Längsrichtung wirkt. Vom Fahrautomaten 22 erhält der Koordinator 16 ein Signal 36, das eine Fahrzeug-Längsbeschleunigung anfordert.

Der Koordinator 16 bewertet und verarbeitet die Signale 32, 34 und 36 und stellt ein dem Soll-Bremsmoment entsprechendes Signal 38 bereit, das vom Bremssystem 24 angefordert wird. Ferner wird ein Signal 40 vom Koordinator 16 bereitgestellt, das einer Soll-Antriebsleistung am Ausgang des Getriebes 14 entspricht und vom Koordinator 26 für den Hybridantrieb 100 angefordert wird. Das Signal 40 wird hierbei über den Koordinator 28 an den Koordinator 26 weitergeleitet. Entsprechend dem Signal 40 ist der Koordinator 26 für die Bestimmung des Soll-Betriebszustandes des Hybridantriebes 100 und die hieraus resultierende Ansteuerung der Antriebsmaschinen 10 beziehungsweise 12 verantwortlich.

Die Ansteuerung der Antriebsmaschinen 10 und 12 erfolgt so, dass die dem.Signal 40 entsprechende Soll-Antriebsleistung am Ausgang des Getriebes 14 realisiert wird. Hierzu gibt der Koordinator 26 der Verbrennungskraftmaschine 10 ein Signal 42, das einem Soll-Ausgangsmoment der Verbrennungskraftmaschine 10 entspricht. Ferner gibt der Koordinator 26 ein Signal 44 an die elektrische Maschine 12 beziehungsweise bei mehreren elektrischen Maschinen 12 an die elektrischen Maschinen 12, das jeweils den Soll-Ausgangsmomenten der elektrischen Maschinen 12 entspricht. Gleichzeitig erhält das Getriebe 14 ein Signal 46, das einem Soll-Gang oder einer Soll-Übersetzung des Getriebes 14 entspricht.

Von der Verbrennungskraftmaschine 10 wird dem Koordinator 26 ein Signal 48 geliefert, das dem aktuellen Motorausgangsmoment der Verbrennungskraftmaschine 10 entspricht. Die elektrischen Maschinen liefern das aktuelle Moment 50. Ferner liefert das Getriebe 14 ein Signal 52 an den Koordinator 26, das dem aktuellen Betriebszustand des Getriebes 14 entspricht. Aus den Signalen 48, 50 und 52 ermittelt der Koordinator 26 das aktuelle Getriebeausgangsmoment und stellt es dem Koordinator 28 als Signal 54 zur Verfügung. Dieser leitet das Signal 54 an den Koordinator zur Fahrzeuglängsbewegung weiter. Vom Bremssystem 24 erhält der Koordinator 16 ein Signal 56, das dem aktuellen Rad-Bremsmoment entspricht.

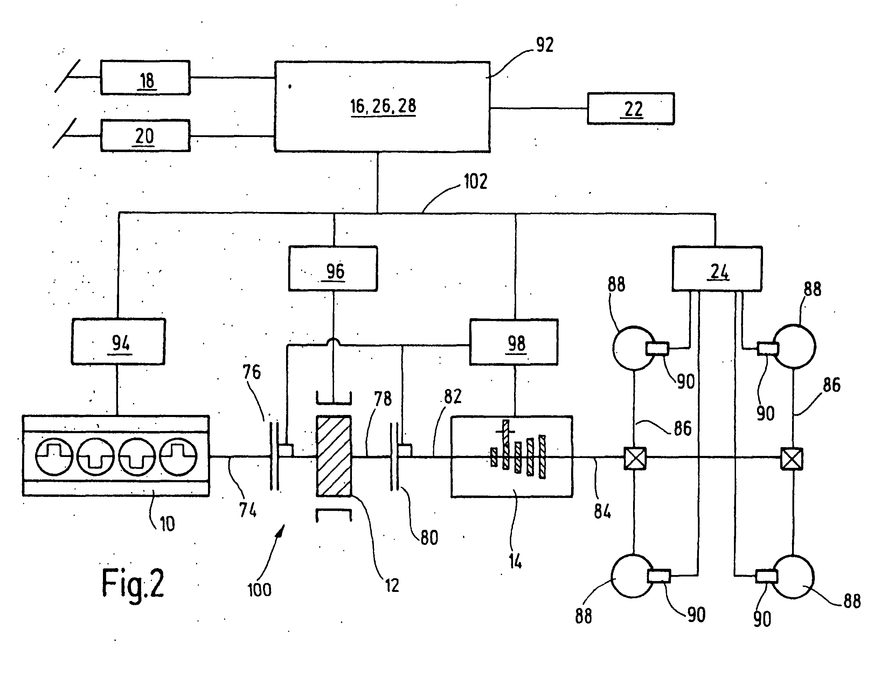

Der Koordinator 26 erhält von der Verbrennungskraftmaschine 10 ein weiteres Signal 58 zur Verfügung, das weitere Betriebsinformationen über.die Verbrennungskraftmaschine 10 enthält. Die Verbrennungskraftmaschine 10 verfügt über ein maximales und ein minimales Motorausgangsmoment. Diese Momente sind entsprechend einer Volllastkennlinie beziehungsweise einer Schleppmomentenkurve über der Motordrehzähl variabel und hängen von weiteren Betriebsparametern wie beispielsweise einer Motortemperatur und dem atmosphärischen Luftdruck ab. Darüber hinaus erhält der Koordinator 26 ein Signal 60 von den elektrischen Maschinen 12. Jede elektrische Maschine 12 verfügt ebenfalls über ein maximales und ein minimales Ausgangsmoment, das von der Drehzahl abhängt. Das maximale und das minimale Ausgangsmoment ist weiterhin abhängig von der Temperatur der elektrischen Maschine 12 und eines Pulswechselrichters (Figur 2). Die potentiellen Momente hängen weiterhin vom Zustand des elektrischen Bordnetzes 30, insbesondere eines Batterie-Ladezustandes und einer Batteriespannung, ab. Das Bordnetz 30 übermittelt sein momentanes Potential den elektrischen Maschinen 12 als Signal 62, so dass diese Information in das Signal 60 mit einfließt.

Der Koordinator 26 ermittelt aus den Informationen der Signale 58 und 60 das Momenten- beziehungsweise Leistungspotential des Hybridantriebs 100 am Ausgang des Getriebes 14. Ein hieraus resultierendes Signal 64 wird vom Koordinator 26 dem Koordinator 28 übermittelt. Hierbei werden insbesondere auch die durch die bauliche Anordnung der Verbrennungskraftmaschine 10, der elektrischen Maschinen 12 und des Getriebes 14 gegebenen physikalischen Zusammenhänge berücksichtigt. Das Signal 64 hängt ferner von möglichen Betriebsmodi des Hybridantriebes 100 ab. Mögliche Betriebsmodi sind beispielsweise rein verbrennungsmotorischer Betrieb, rein elektrischer Betrieb oder hybrider elektrisch-verbrennungsmotorischer Betrieb. Für jeden dieser Betriebsmodi wird ein Momentenbeziehungsweise Leistungspotential am Ausgang des Getriebes 14 ermittelt und dem Koordinator 28 mitgeteilt. Das Signal 64 hängt ferner vom eingelegten Gang beziehungsweise der eingestellten Getriebeübersetzung und vom Schaltzustand einer oder mehrerer Kupplungen ab. Neben der Information des aktuell eingelegten Ganges teilt der Koordinator 26 dem Koordinator 28 darüber hinaus auch die Informationssignale bei möglichen anderen Gängen mit.

Vom Koordinator 28 werden die Momenten- beziehungsweise Leistungspotentiale des Hybridantriebes 100 dem Koordinator 16 als Signal 66 zur Verfügung gestellt. Hierbei berücksichtigt der Koordinator 28 mögliche Betriebsmodi und übermittelt nur die Potentiale zugelassener Betriebsmodi.

Vom Bremssystem 24 erhält der Koordinator 16 ferner ein Signal 68, das betriebsbedingte Zustandsinformationen über das Bremssystem 24 beinhaltet. Diese können beispielsweise eine momentane Bremskraft, ein Bremskraftgradient oder dergleichen sein.

Aufgrund der Signale 66 und 68 liefert der Koordinator 16 einerseits dem Fahrpedal 18 ein Signal 70, das den Bereich vorgibt, innerhalb dessen eine Interpretation des Fahrpedals 18 erfolgen kann. Ferner wird dem Bremspedal 20 ein Signal 72 zugeführt, das den Bereich definiert, innerhalb dessen eine Interpretation des Bremspedals 20 erfolgen soll.

Der Koordinator 16 verknüpft ferner das Signal 34 des Bremspedals 20 mit dem Signal 54, das dem aktuellen Getriebe-Ausgangsmoment des Hybridantriebes 100 entspricht und ermittelt hieraus das Signal 38 als Vorgabe für das Soll-Radbremsmoment des Bremssystems 24.

Es wird also deutlich, dass die Vorgabe des Soll-Radbremsmomentes (Signal 38) unter Berücksichtigung des vom Bordnetz 30 gelieferten Signals 62 und der gelieferten Potentialinformation erfolgt. Diese wird über den Koordinator 26 mit den von der Verbrennungskraftmaschine 10, der elektrischen Maschine 12 und dem Getriebe 14 gelieferten Informationen verknüpft, so dass durch Weiterleitung der entsprechenden Signale an den. Koordinator 16 eine koordinierte Ansteuerung des Hybridantriebes 100, das heißt der Verbrennungskraftmaschine 10, der elektrischen Maschine 12 und des Getriebes 14 sowie des Bremssystems 24 erreicht werden kann, dass bei Aktivierung des Bremssystems 30 beziehungsweise bei sich im Schubbetrieb befindenden Verbrennungskraftmaschine 10 eine optimale Rückgewinnung von Bremsenergie durch gezielten Generatorbetrieb der elektrischen Maschine 12 erfolgen kann. Durch die koordinierte Ansteuerung der Antriebsmaschinen 10 beziehungsweise 12 und des Bremssystems 24 in Abhängigkeit der Anforderungen des Bremspedals 20 (Signal 34) wird hierbei der negativen Momentanforderung (Verzögerungswunsch) an das Fahrzeug optimal entsprochen. Unnötige Verluste werden hierdurch weitgehend vermieden.

Figur 2 zeigt in einem Blockschaltbild die Umsetzung der anhand von Figur 1 erläuterten Steuerung eines Hybridantriebes. Gleiche Teile wie in Figur 1 sind mit gleichen Bezugszeichen versehen und nicht nochmals erläutert. Der Hybridantrieb 100 umfasst die Verbrennungskraftmaschine 10, die elektrische Maschine 12 sowie das Getriebe 14. Eine Kurbelwelle 74 der Verbrennungskraftmaschine 10 ist über eine erste Kupplung 76 mit der elektrischen Maschine 12 wirkverbindbar. Eine Abtriebswelle 78 der elektrischen Maschine 12 ist über eine zweite Kupplung 80 mit einer Eingangswelle 82 des Getriebes 14 wirkverbindbar. Eine Abtriebswelle 84 des Getriebes 14 ist mit Antriebswellen 86 wirkverbunden, die hier schematisch angedeutete Räder 88 antreiben. Auf die Räder 88 können hier angedeutete Bremseinrichtungen 90 einwirken.

Das Fahrpedal 18, das Bremspedal 20 und der Fahrautomat 22 sind mit einem Steuergerät 92 verbunden, das die in Figur 1 erläuterten Koordinatoren 16, 26 und 28 umfasst.

Die Verbrennungskraftmaschine 10 ist über eine Steuerung 94 ansteuerbar. Die elektrische Maschine 12 ist über einen Pulswechselrichter 96 ansteuerbar, während das Getriebe 14 und die Kupplungen 76 und 80 über eine Küpplungssteuerung 98 ansteuerbar sind. Die Bremseinrichtungen 90 sind von dem Bremssystem 24 ansteuerbar. Das Steuergerät 92 ist mit den Steuerungen 94, 96, 98 in dem Bremssystem 24 über ein Bussystem (zum Beispiel CAN) 102 verbunden. Über diesen Bus 102 erfolgt der Austausch der in Figur 1 dargestellten Informationsflüsse zwischen den einzelnen Aggregaten zur koordinierten Ansteuerung der Verbrennungskraftmaschine 10, der elektrischen Maschine 12, des Getriebes 14 und des Bremssystems 24. Anhand der Darstellung in Figur 2 wird deutlich, dass sich die Erfindung ohne Aufwand in bestehende Fahrzeugstrukturen integrieren lässt.

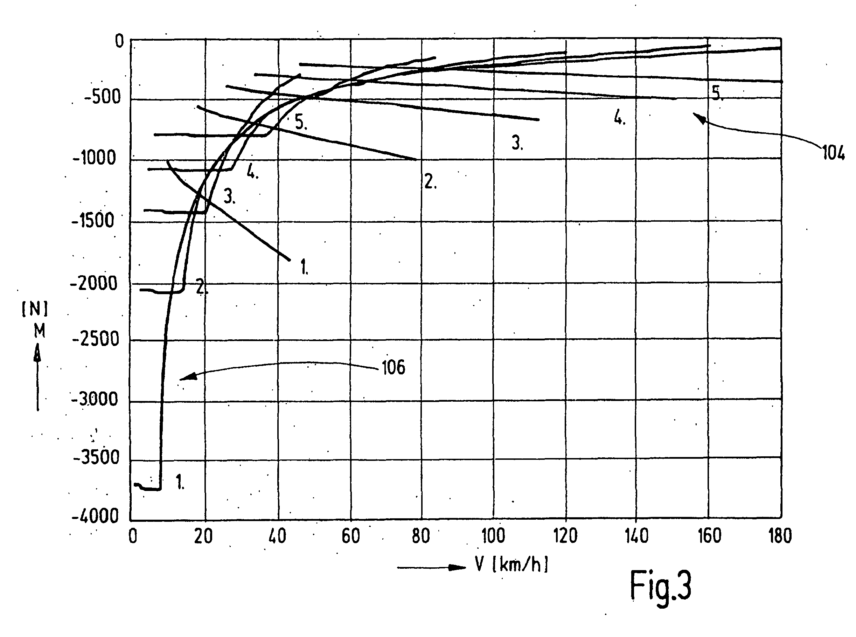

In Figur 3 ist in Kennlinien der Momentverlauf M über eine Fahrzeuggeschwindigkeit V dargestellt. Hierbei ist der Bereich negativer Momente, umgerechnet auf eine Bremskraft am Rad dargestellt. Für die Kurvenschar wird von dem in Figur 2 schematisch dargestellten Parallel-Hybridantrieb 100 mit einem 5-Gangautomatisierten Schaltgetriebe 14, einer elektrischen Maschine 12, die mittels der zwei automatisiert betätigbaren Kupplungen 76 und 80 zwischen einer Schwungscheibe der Verbrennungskraftmaschine 10 und die Getriebeeingangswelle 82 angeordnet ist, ausgegangen.

In Figur 3 sind für jeden der Gänge, die mit 1., 2., 3., 4. beziehungsweise 5. bezeichnet sind, das maximale Schleppmoment der Verbrennungskraftmaschine 10 als Kennlinien 104 und das maximale Schleppmoment der elektrischen Maschine 12, das deren minimalem Moment entspricht, als Kennlinie 106 eingetragen. Bei rein verbrennungsmotorischem Betrieb des Hybridantriebes 100 ist das Potential durch den Verlauf des Schleppmomentes der Verbrennungskraftmaschine 10 gegeben, während im rein elektrischen Betrieb des Hybridantriebes 100 das Potential durch den Verlauf des minimalen Momentes der elektrischen Maschine 12 gegeben ist. Im hybriden Betrieb können diese beiden Momentkennlinien - immer auf den jeweiligen Gang bezogen - überlagert werden, so dass sich maximal die Summe der beiden Kurven als Potential ergibt.

## Patentansprüche

1. Verfahren zur Steuerung eines Hybridantriebs eines Fahrzeugs, wobei der Hybridantrieb als Antriebsmaschinen eine Verbrennungskraftmaschine und wenigstens eine elektrische Maschine umfasst und die Abtriebswellen der Antriebsmaschinen mit einem Antriebsstrang des Fahrzeugs wirkverbindbar sind, und wobei in Abhängigkeit von einer negativen Momentanforderung eine diese negative Momentanforderung berücksichtigende koordinierte Ansteuerung der Antriebsmaschinen und eines Radbremssystems des Fahrzeugs erfolgt, **dadurch gekennzeichnet, dass** eine Vorgabe von Soll-Radbremsmomenten an das elektrisch ansteuerbare Radbremssystem (24) neben der negativen Momentanforderung durch ein Bremspedal (20) ein aktuelles Getriebe-Ausgangsmoment des Hybridantriebes (100) berücksichtigt.

2. Verfahren nach Anspruch 1, **dadurch gekennzeichnet, dass** die Vorgabe von Soll-Radbremsmomenten an das Radbremssystem (24) unter Berücksichtigung des Betriebszustandes des Hybridantriebes (100) erfolgt.

3. Verfahren nach einem der vorhergehenden Ansprüche, **dadurch gekennzeichnet, dass** für die Vorgabe der Soll-Radbremsmomente das aktuelle Getriebe-Ausgangsmoment mit dem Anforderungssignal (34) eines Bremspedals (20) verknüpft wird.

4. Verfahren nach einem der vorhergehenden Ansprüche, **dadurch gekennzeichnet, dass** eine Interpretation des vom Bremspedal (20) gelieferten Signals (24) innerhalb eines Bereiches erfolgt, der von betriebsbedingten Zustandsinformationen des Bremssystems (24) und momentanen Momenten- beziehungsweise Leistungspotentialen des Hybridantriebes (100) definiert wird.

5. Verfahren nach einem der vorhergehenden Ansprüche, **dadurch gekennzeichnet, dass** für die Momenten- und Leistungspotentiale des Hybridantriebes (100) Betriebsinformationen der Verbrennungskraftmaschine (100) und der elektrischen Maschine (12) berücksichtigt werden.

6. Verfahren nach einem der vorhergehenden Ansprüche, **dadurch gekennzeichnet, dass** für die Momenten- und Leistungspotentiale der elektrischen Maschine (12) der Betriebszustand eines elektrischen Bordnetzes (30) berücksichtigt wird.

7. Verfahren nach Anspruch 6, **dadurch gekennzeichnet, dass** ein Batterie-Ladezustand und/oder eine Batteriespannung berücksichtigt wird.

8. Verfahren nach einem der vorhergehenden Ansprüche, **dadurch gekennzeichnet, dass** für die Momenten- und Leistungspotentiale die möglichen Betriebsmodi des Hybridantriebes (100) berücksichtigt werden.

9. Verfahren nach einem der vorhergehenden Ansprüche, **dadurch gekennzeichnet, dass** für die Momenten- und Leistungspotentiale ein eingelegter Gang des Getriebes (14) berücksichtigt wird.

10. Verfahren nach einem der vorhergehenden Ansprüche, **dadurch gekennzeichnet, dass** für die Momenten-und Leistungspotentiale der Schaltzustand von Kupplungen (76, 80) des Hybridantriebes (100) berücksichtigt wird.

## Claims

1. Method for controlling a hybrid drive of a vehicle, the hybrid drive comprising, as drive machines, an internal combustion engine and at least one electric machine, and it being possible to connect the output shafts of the drive machines operatively to a drive section of the vehicle, and coordinated actuation of the drive machines and of a wheel brake system of the vehicle taking place as a function of a negative torque request, in a way which takes into account this negative torque request, **characterized in that** a predefinition of setpoint wheel brake torques to the electrically actuable wheel brake system (24) takes into account both the negative torque request by means of a brake pedal (20) and a current gearbox output torque of the hybrid drive (100).

2. Method according to Claim 1, **characterized in that** setpoint wheel brake torques are predefined to the wheel brake system (24) taking into account the operating state of the hybrid drive (100).

3. Method according to one of the preceding claims, **characterized in that**, for the predefinition of the setpoint wheel brake torques, the current gearbox output torque is logically combined with the request signal (34) of a brake pedal (20).

4. Method according to one of the preceding claims, **characterized in that** the signal (24) which is supplied by the brake pedal (20) is interpreted within a range which is defined by operation-related status information of the brake system (24) and instantaneous torque or power potentials of the hybrid drive (100).

5. Method according to one of the preceding claims, **characterized in that** operating information of the internal combustion engine (100) and of the electric machine (12) is taken into account for the torque and power potentials of the hybrid drive (100).

6. Method according to one of the preceding claims, **characterized in that** the operating state of an on-board electric system (30) is taken into account for the torque and power potentials of the electric machine (12).

7. Method according to Claim 6, **characterized in that** a battery charge state and/or a battery voltage are taken into account.

8. Method according to one of the preceding claims, **characterized in that** the possible operating modes of the hybrid drive (100) are taken into account for the torque and power potentials.

9. Method according to one of the preceding claims, **characterized in that** an engaged gear speed of the gearbox (14) is taken into account for the torque and power potentials.

10. Method according to one of the preceding claims, **characterized in that** the shifted state of clutches (76, 80) of the hybrid drive (100) is taken into account for the torque and power potentials.

## Revendications

1. Procédé de commande d'un entraînement hybride d'un véhicule, selon lequel l'entraînement hybride comprend comme moteur d'entraînement un moteur à combustion interne et au moins un moteur électrique, et les arbres de sortie des moteurs d'entraînement peuvent être reliés de manière active à une ligne d'entraînement du véhicule, et en fonction d'une demande de couple négatif on effectue une commande de coordination des moteurs d'entraînement et d'un système de freinage de roue du véhicule en tenant compte de cette demande de couple négatif,
**caractérisé en ce qu'**
une prédéfinition de couples de freinage de roue de consigne pour le système de freinage de roue (24) commandé électriquement tient compte d'un couple de sortie actuel de boîte de vitesses de l'entraînement hybride (100) en plus de la demande de couple négatif par une pédale de frein (20).

2. Procédé selon la revendication 1,
**caractérisé en ce que**
la prédéfinition de couples de freinage de roue de consigne pour le système de freinage de roue (24) s'effectue en tenant compte de l'état de fonctionnement de l'entraînement hybride (100).

3. Procédé selon l'une quelconque des revendications précédentes,
**caractérisé en ce que**
pour la prédéfinition de couples de freinage de roue de consigne, le couple de sortie actuel de boîte de vitesses est combiné avec le signal de demande (34) d'une pédale de frein (20).

4. Procédé selon l'une quelconque des revendications précédentes,
**caractérisé en ce qu'**
une interprétation du signal (24) fourni par la pédale de frein (20) s'effectue dans une plage définie par des informations d'état dépendant du fonctionnement du système de freinage (24) et par des potentiels momentanés de couple ou de puissance de l'entraînement hybride (100).

5. Procédé selon l'une quelconque des revendications précédentes,
**caractérisé en ce que**
pour les potentiels de couple et de puissance de l'entraînement hybride (100), on tient compte d'informations de fonctionnement du moteur à combustion interne (100) et de la machine électrique (12).

6. Procédé selon l'une quelconque des revendications précédentes,
**caractérisé en ce que**
pour les potentiels de couple et de puissance de la machine électrique (12), on tient compte de l'état de fonctionnement d'un réseau de bord électrique (30).

7. Procédé selon la revendication 6,
**caractérisé en ce qu'**
on tient compte d'un état de charge de batterie et/ou d'une tension de batterie.

8. Procédé selon l'une quelconque des revendications précédentes,
**caractérisé en ce que**
pour les potentiels de couple et de puissance, on tient compte des modes de fonctionnement possibles de l'entraînement hybride (100).

9. Procédé selon l'une quelconque des revendications précédentes,
**caractérisé en ce que**
pour les potentiels de couple et de puissance, on tient compte d'une vitesse enclenchée de la boîte de vitesses (14).

10. Procédé selon l'une quelconque des revendications précédentes,
**caractérisé en ce que**
pour les potentiels de couple et de puissance, on tient compte de l'état de commutation d'embrayages (76, 80) de l'entraînement hybride (100).
